# EUROPÄISCHE PATENTSCHRIFT

(11) **EP 4 303 450 B1**
(45) Veröffentlichungstag und Bekanntmachung des Hinweises auf die Patenterteilung: **18.09.2024**
(21) Anmeldenummer: 23183515.8
(22) Anmeldetag: 05.07.2023
(51) Int. Cl.: F15B 15/19, B60R 21/38, F15B 15/14

(54) **PYROTECHNISCHER AKTUATOR**
PYROTECHNIC ACTUATOR
ACTIONNEUR PYROTECHNIQUE

(30) Priorität: 05.07.2022 AT 504912022
(43) Veröffentlichungstag der Anmeldung: 10.01.2024
(73) Patentinhaber: Astotec Automotive GmbH, 2552 Hirtenberg (AT)
(72) Erfinder: Feik, Gunter, 2512 Tribuswinkel (AT); Kreuz, Peter, 2440 Moosbrunn (AT); Marker, Markus, 2561 Grillenberg (AT)
(74) Vertreter: Müllner, Martin

(56) Entgegenhaltungen:
- EP-A1- 2 583 870
- EP-A1- 3 260 706
- JP-A- 2010 084 788

## Beschreibung

### Technisches Gebiet

Die vorliegende Erfindung betrifft einen pyrotechnischen Aktuator mit einem Aktuatorgehäuse, das über den Großteil seiner Länge einen zylindrischen Hohlraum umschließt, und mit einem Gasgenerator mit Zünder, Treibladung und Treibladungsgehäuse, wobei das Treibladungsgehäuse eine Sollbruchstelle in Form einer Verringerung der Dicke aufweist, und wobei der Durchmesser in dem Bereich, der auf der dem Zünder abgewandten Seite der Sollbruchstelle liegt, geringer ist als der Durchmesser in dem Bereich, der auf der dem Zünder zugewandten Seite der Sollbruchstelle liegt.

### Stand der Technik

Systeme zur Minderung der Verletzungsschwere von Fußgängern bei Unfällen mit Kraftfahrzeugen finden immer stärkere Verbreitung. Neben dem Notbremsassistenten, der im idealen Fall den Zusammenstoß des Fahrzeuges mit dem Fußgänger gänzlich verhindert, zumindest aber die Anprallgeschwindigkeit verringert, kommen auch Systeme zur Abmilderung der Unfallfolgen in nicht abwendbaren Situationen zum Einsatz. Diese stellen einen zusätzlichen Deformationsraum zwischen der Motorhaube und den harten Komponenten im Motorraum bereit, indem die Motorhaube im Scharnierbereich, bei manchen Premium-Fahrzeugen zusätzlich auch im Schlossbereich, angestellt wird. Zumeist wird diese Anstellung mit pyrotechnischen Aktuatoren bewerkstelligt, die bei geringem Bauraum die entsprechenden Kräfte gut aufbringen können.

Ein derartiger Aktuator ist beispielsweise in DE 102017112054 A von Hirtenberger (heute: Astotec) beschrieben. Es existiert eine große Anzahl an Herstellern und Varianten, beispielsweise wird auf die EP 2699455 B von Autoliv oder die US 10875491 B von Key Safety Systems (heute: Joyson Safety Systems) verwiesen. All diesen Systemen gemeinsam ist der Aufbau, bestehend aus einem Gehäuse, in dem ein Kolben mittels eines Gasgenerators druckbeaufschlagt wird.

Probleme bereiten jedoch große Leistungen. Hier wird in der Regel der Spalt zwischen Kolbentulpe und Innenwand des Gehäuses mittels eines O-Rings abgedichtet, manchmal ist auch ein zusätzlicher Bauteil, wie z.B. in AT 12351U von Hirtenberger beschrieben, vorgesehen. Sowohl die Montage des O-Rings wie auch eines eventuellen zusätzlichen Bauteils bedeuten erhöhten Aufwand.

EP 2583870 A1 zeigt eine Kolben-Zylinder-Einheit, die eine Kappe aufweist, die so am Zylinder befestigt ist, dass sie durch Verschieben des Kolbens vom Zylinder gelöst bzw. abgerissen wird.

EP 3260706 A1 zeigt einen pyrotechnischen Aktuator mit einem Abdeckelement um eine Zündeinheit, wobei das Abdeckelement im Falle einer Zündung einen Kolben antreiben soll.

JP 2010084788 A zeigt einen pyrotechnischen Aktuator, der einen Abschirmungskörper zwischen einem Gasgenerator und einem Kolben aufweist. Der Abschirmungskörper sorgt dafür, dass ein Gas, das beim Zünden des Gasgenerators entsteht, abgekühlt wird, bevor es mit dem Kolben und einem am Kolben befestigten Dichtring in Kontakt kommt.

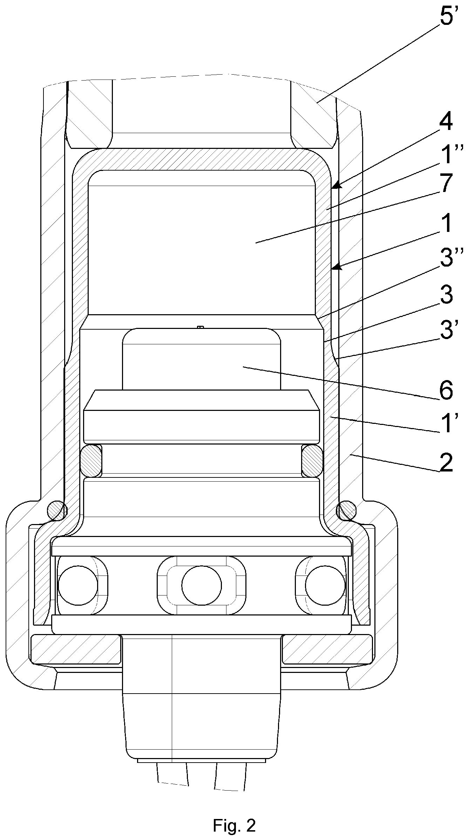

Ein pyrotechnischer Aktuator der eingangs genannten Art ist aus DE 20312222U , Fig. 2a und 2b bekannt. Diese Vorrichtung dient jedoch nicht zum Anstellen einer Motorhaube, sondern als Sicherheitsgurtstraffer. Dementsprechend ist hier auch kein Kolben vorgesehen, sondern das Treibladungsgehäuse ist an dem dem Zünder abgewandten Ende massiv ausgeführt, bildet also selbst eine Art kurzen Kolben.

Gemäß dieser Schrift umschließt das Aktuatorgehäuse einen zylindrischen Hohlraum, wobei an diesen zylindrischen Hohlraum anschließend, im Bereich des Zünders, eine Stufe vorgesehen ist, hinter welcher der Durchmesser des Hohlraums vergrößert ist. Das Treibladungsgehäuse weist eine entsprechende Abstufung auf, und im Bereich dieser Abstufung ist die Dicke des Treibladungsgehäuses deutlich verringert, wodurch sich eine Sollbruchstelle ergibt. Bei Zündung reißt das Treibladungsgehäuse an dieser Stelle ab, und der abgerissene Teil mit dem massiv ausgeführten Ende bewegt sich im zylindrischen Hohlraum vom Zünder weg. Soweit dies aus den Zeichnungen erkennbar ist, liegt das Treibladungsgehäuse auf der dem Zünder abgewandten Seite der Abstufung vollflächig am Aktuatorgehäuse an.

### Kurzbeschreibung der Erfindung

Es ist Aufgabe der vorliegenden Erfindung, einen pyrotechnischen Aktuator zu schaffen, der zum Anstellen von Motorhauben geeignet ist, der keinen O-Ring und auch kein zusätzliches Bauteil zur Abdichtung benötigt und der dennoch eine Abdichtung der vom pyrotechnischen Gasgenerator erzeugten Gase bewirkt, sodass diese ihre volle Wirkung entfalten können.

Diese Aufgabe wird durch einen pyrotechnischen Aktuator der eingangs genannten Art erfindungsgemäß dadurch gelöst, dass im Aktuatorgehäuse ein im zylindrischen Hohlraum verschiebbarer Kolben vorgesehen ist, dass die Sollbruchstelle des Treibladungsgehäuses im zylindrischen Hohlraum des Aktuatorgehäuses liegt, dass auf der dem Zünder abgewandten Seite der Sollbruchstelle das Treibladungsgehäuse zur Innenwand des Aktuatorgehäuses einen Abstand hat, und dass bei der Zündung der Bereich des Treibladungsgehäuses, der auf der dem Zünder abgewandten Seite der Sollbruchstelle liegt, abgerissen wird und der abgerissene Bereich des Treibladungsgehäuses den Kolben antreibt und zur Innenwand des Aktuatorgehäuses abdichtet.

Ein Aktuator bekannter Bauart besitzt erfindungsgemäß ein Treibladungsgehäuse mit einer Dünnstelle an der Seite und einem benachbarten Durchmessersprung. Abweichend zu den bekannten Designs weist das Treibladungsgehäuse keine Schwächung im Bodenbereich auf, beispielsweise durch die Prägung eines Sternes oder einer dünnwandigen Membrane in den Boden. Bei diesen bekannten Designs entweichen die Gase durch diese Schwächung aus dem Treibladungsgehäuse und treiben den Kolben direkt an.

Erfindungsgemäß reißt hingegen bei Zündung des Zünders und somit der Treibladung das Treibladungsgehäuse an der Sollbruchstelle ab. Es bildet sich dadurch ein abgerissener Teil, der den Kolben antreibt und der für eine Dichtung gegenüber dem Aktuatorgehäuse sorgt, weil er durch den Druck der erzeugten Gase an die Innenwand des Aktuatorgehäuses gedrückt wird. Damit dieses Abreißen zuverlässig erfolgt, ist bevorzugt, dass die Verringerung der Dicke radial ist und umlaufend um das Treibladungsgehäuse ausgebildet ist.

Von großer Bedeutung ist das Verhältnis zwischen der Position der Sollbruchstelle in Bezug zum oberen Rand des Treibladungsgehäuses und dem Durchmessersprung im Außendurchmesser des Treibladungsgehäuses. Liegt die Sollbruchstelle des Treibladungsgehäuses nahe der oberen Kante des Treibladungsgehäuses, ist nur ein kleiner Durchmessersprung überbrückbar. Ist die Sollbruchstelle weiter vom Ende des Treibladungsgehäuses entfernt, kann bedingt durch das "Aufblasen" des abgerissenen Teils des Treibladungsgehäuses ein größerer Spalt überbrückt werden.

Andererseits führt eine längere Kontaktzone zwischen abgerissenem Teil des Treibladungsgehäuses und der Innenwand des Aktuatorgehäuses zu einer erhöhten Reibung und im Extremfall zum Festsetzen ohne Trennung. Außerdem verhindert ein zu großer Spalt den zuverlässigen Kontakt des abgerissenen Teils des Treibladungsgehäuses mit der Innenwand des Gehäuses, es existiert also ein optimaler Bereich.

Für typische Aktuatoranwendungen mit einem Gehäuseinnendurchmesser von 13-20 mm und einem Treibladungsgehäuse aus AI 99,9 sind folgende Werte vorteilhaft:

Ein Spaltdurchmesser im zünderfernen Bereich des Treibladungsgehäuses von 0,1 - 2 mm; ein Abstand der Sollbruchstelle zur Oberseite des Treibladungsgehäuses von 1 - 10 mm; und ein Berstdruck des Treibladungsgehäuses entlang der umlaufenden Sollbruchstelle von 50 - 500 bar.

Es versteht sich von selbst, dass dieses Prinzip auch für Treibladungsgehäuse aus Stahl oder Kunststoff anwendbar ist.

Es ist zweckmäßig, wenn die Sollbruchstelle dadurch realisiert ist, dass sich der Innendurchmesser des Treibladungsgehäuses an einer anderen Stelle als der Außendurchmesser verringert, sodass die Wandstärke zwischen diesen beiden Stellen reduziert ist. Dadurch wird eine besonders einfache Herstellung ermöglicht. Es ist aber auch möglich, dass die Sollbruchstelle durch eine Prägung im Treibladungsgehäuse realisiert ist, und auch, dass die Sollbruchstelle durch einen Einstich im Treibladungsgehäuse realisiert ist.

In einer besonderen Ausgestaltung ist vorgesehen, dass das zündernahe Ende des Kolbens einen planen Boden besitzt. Dadurch kann sich der abgerissene Bereich des Treibladungsgehäuses gut an den Kolben anlegen.

### Kurze Beschreibung der Zeichnungsfiguren

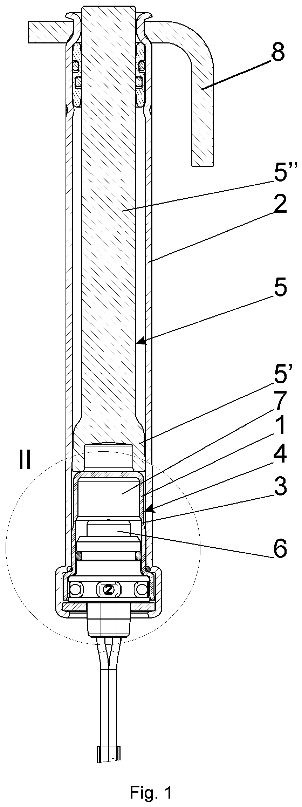

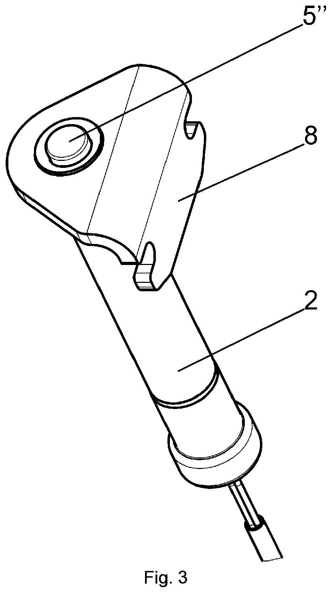

An Hand der beiliegenden Zeichnungen wird die vorliegende Erfindung näher erläutert. Es zeigt: Fig. 1 einen erfindungsgemäßen pyrotechnischen Aktuator im Längsschnitt; Fig. 2 den Bereich II von Fig. 1 in vergrößertem Maßstab; und Fig. 3 eine perspektivische Ansicht des Aktuators der Fig. 1 und 2.

### Beschreibung der Ausführungsarten

Der erfindungsgemäße Aktuator (siehe Fig. 1) weist ein Aktuatorgehäuse 2 auf, an dessen oberem Ende eine Montageplatte 8 befestigt ist. In diesem Aktuatorgehäuse 2 ist ein Kolben 5 mit Kolbenstange 5" und Kolbentulpe 5' verschiebbar angeordnet. Die Kolbenstange 5" ragt in der Ausgangslage oben geringfügig aus dem Aktuatorgehäuse 2 hervor. Unterhalb des Kolbens 5 befindet sich der pyrotechnische Gasgenerator 4 mit Zünder 6, Treibladung 7 und Treibladungsgehäuse 1.

Erfindungsgemäß hat das Treibladungsgehäuse 1 eine spezielle Form (siehe Fig. 2): Der Außendurchmesser verringert sich an der Stelle 3', wogegen sich der Innendurchmesser an einer anderen, weiter oben ("oben" wie in Fig. 1 und 2 gesehen) liegenden Stelle 3" verringert. Dadurch entsteht eine Sollbruchstelle 3, wo das Treibladungsgehäuse 1 eine verringerte Wandstärke hat. Es entsteht ein (vom Zünder 6 abgewandter) Bereich 1", der von der Innenwand des Aktuatorgehäuses 2 einen geringen Abstand hat, und ein (dem Zünder 6 zugewandter) Bereich 1', wo dies nicht der Fall ist, im Gegenteil, in diesem Bereich 1' liegt eine Presspassung vor, sodass der Gasgenerator 4 zuverlässig und spielfrei im Aktuatorgehäuse 2 fixiert ist.

Bei diesem Ausführungsbeispiel besteht das Treibladungsgehäuse 1 aus Aluminium. Der Spalt zwischen dem Bereich 1" und der Innenwand des Aktuatorgehäuses 2 beträgt 0,5 mm, und die Höhe des Bereichs 1", also der Abstand der Sollbruchstelle 3 vom zünderfernen Ende des Treibladungsgehäuses, beträgt 8 mm.

Wird nun der Zünder 6 gezündet, wird auch die Treibladung 7 gezündet, und ab einem Berstdruck von 150 - 200 bar bricht die Sollbruchstelle 3, und der Bereich 1" löst sich vom Bereich 1'. Infolge des entstandenen Drucks weitet sich der Bereich 1" auf, sodass er an der Innenwand des Aktuatorgehäuses 2 dicht anliegt. Wesentlich ist, dass der Spalt, der vor der Zündung zwischen dem Bereich 1" und der Innenwand des Aktuatorgehäuses 2 vorhanden war, so dimensioniert ist, dass zwar der Bereich 1" so stark aufgeweitet wird, dass er dicht am Aktuatorgehäuse 2 anliegt, dass aber ein Großteil des Drucks für die Aufweitung des Bereichs 1" notwendig ist, sodass die Kraft, mit der der Bereich 1" gegen die Innenwand des Aktuatorgehäuses 2 gedrückt wird, relativ gering bleibt und somit auch die Reibung relativ gering bleibt. Der abgerissene Bereich 1" schiebt somit den Kolben 5 aus dem Aktuatorgehäuse 2 nach oben, sodass die Kolbenstange 5" aus dem Aktuatorgehäuse 2 nach oben ausfährt.

### Liste der Bezugszeichen

1 Treibladungsgehäuse
1', 1" Bereiche von 1
2 Aktuatorgehäuse
3 Sollbruchstelle
3' Stelle der Verringerung des Außendurchmessers
3" Stelle der Verringerung des Innendurchmessers
4 Gasgenerator
5 Kolben
5' Kolbentulpe
5" Kolbenstange
6 Zünder
7 Treibladung
8 Montageplatte

## Patentansprüche

1. Pyrotechnischer Aktuator mit einem Aktuatorgehäuse (2), das über den Großteil seiner Länge einen zylindrischen Hohlraum umschließt, und mit einem Gasgenerator (4) mit Zünder, Treibladung und Treibladungsgehäuse (1), wobei das Treibladungsgehäuse (1) eine Sollbruchstelle (3) in Form einer Verringerung der Dicke aufweist, und wobei der Durchmesser in dem Bereich (1"), der auf der dem Zünder (6) abgewandten Seite der Sollbruchstelle (3) liegt, geringer ist als der Durchmesser in dem Bereich (1'), der auf der dem Zünder (6) zugewandten Seite der Sollbruchstelle (3) liegt, **dadurch gekennzeichnet, dass** im Aktuatorgehäuse (2) ein im zylindrischen Hohlraum verschiebbarer Kolben (5) vorgesehen ist, **dass** die Sollbruchstelle (3) des Treibladungsgehäuses (1) im zylindrischen Hohlraum des Aktuatorgehäuses (2) liegt, **dass** auf der dem Zünder (6) abgewandten Seite der Sollbruchstelle (3) das Treibladungsgehäuse (1) zur Innenwand des Aktuatorgehäuses (2) einen Abstand hat, und dass bei der Zündung der Bereich (1") des Treibladungsgehäuses (1), der auf der dem Zünder (6) abgewandten Seite der Sollbruchstelle (3) liegt, abgerissen wird und der abgerissene Bereich (1") des Treibladungsgehäuses (1) den Kolben (5) antreibt und zur Innenwand des Aktuatorgehäuses (2) abdichtet.

2. Pyrotechnischer Aktuator nach Anspruch 1, **dadurch gekennzeichnet, dass** die Verringerung der Dicke radial ist und umlaufend um das Treibladungsgehäuse (1) ausgebildet ist.

3. Pyrotechnischer Aktuator nach Anspruch 1 oder 2, **dadurch gekennzeichnet, dass** das Treibladungsgehäuse (1) bei Zündung an der Sollbruchstelle (3) abreißt und der Kolben (5) durch den abgerissenen Bereich (1") des Treibladungsgehäuses (1) angetrieben wird.

4. Pyrotechnischer Aktuator nach einem der Ansprüche 1 bis 3, **dadurch gekennzeichnet, dass** der Spalt zwischen Innenwand des Aktuatorgehäuses (2) und dem zünderfernen Bereich (1") des Treibladungsgehäuses (1) 0,1 - 2 mm beträgt.

5. Pyrotechnischer Aktuator nach einem der Ansprüche 1 bis 4, **dadurch gekennzeichnet, dass** der Abstand zwischen dem zünderfernen Ende des Treibladungsgehäuses (1) und der Sollbruchstelle (3), also die Höhe des zünderfernen Bereichs (1"), 1 - 10 mm beträgt.

6. Pyrotechnischer Aktuator nach einem der Ansprüche 1 bis 5, **dadurch gekennzeichnet, dass** der Berstdruck, bei dem das Treibladungsgehäuse (1) entlang der Sollbruchstelle (3) aufreißt, 50 - 500 bar beträgt.

7. Pyrotechnischer Aktuator nach einem der Ansprüche 1 bis 6, **dadurch gekennzeichnet, dass** das Treibladungsgehäuse (1) aus Aluminium oder einer Aluminium-Legierung besteht.

8. Pyrotechnischer Aktuator nach einem der Ansprüche 1 bis 6, **dadurch gekennzeichnet, dass** das Treibladungsgehäuse (1) aus Stahl oder Kunststoff besteht.

9. Pyrotechnischer Aktuator nach einem der Ansprüche 1 bis 8, **dadurch gekennzeichnet, dass** die Sollbruchstelle (3) dadurch realisiert ist, dass sich der Innendurchmesser des Treibladungsgehäuses (1) an einer anderen Stelle (3") als der Außendurchmesser verringert, sodass die Wandstärke zwischen diesen beiden Stellen (3', 3") reduziert ist.

10. Pyrotechnischer Aktuator nach einem der Ansprüche 1 bis 8, **dadurch gekennzeichnet, dass** die Sollbruchstelle (3) durch eine Prägung im Treibladungsgehäuse (1) realisiert ist.

11. Pyrotechnischer Aktuator nach einem der Ansprüche 1 bis 8, **dadurch gekennzeichnet, dass** die Sollbruchstelle (3) durch einen Einstich im Treibladungsgehäuse (1) realisiert ist.

12. Pyrotechnischer Aktuator nach einem der Ansprüche 1 bis 11, **dadurch gekennzeichnet, dass** das zündernahe Ende des Kolbens (5) einen planen Boden besitzt.

## Claims

1. A pyrotechnic actuator having an actuator housing (2) which encloses a cylindrical cavity over the majority of its length, and having a gas generator (4) with igniter, propellant charge and propellant charge housing (1), wherein the propellant charge housing (1) includes a predetermined breaking point (3) in the form of a reduction in thickness, and wherein the diameter in the region (1") which is located on the side of the predetermined breaking point (3) facing away from the igniter (6) is smaller than the diameter in the region (1') which is located on the side of the predetermined breaking point (3) facing the igniter (6), **characterised in that** a piston (5) displaceable in the cylindrical cavity is provided in the actuator housing (2), **in that** the predetermined breaking point (3) of the propellant charge housing (1) is located in the cylindrical cavity of the actuator housing (2), **in that** on the side of the predetermined breaking point (3) facing away from the igniter (6) the propellant charge housing (1) has a spacing from the inner wall of the actuator housing (2), **and in that** upon ignition the region (1") of the propellant charge housing (1) which is located on the side of the predetermined breaking point (3) facing away from the igniter (6) is torn off, and the torn off region (1") of the propellant charge housing (1) drives the piston (5) and seals it from the inner wall of the actuator housing (2).

2. The pyrotechnic actuator according to claim 1, **characterised in that** the reduction in thickness is radial and is formed circumferentially around the propellant charge housing (1).

3. The pyrotechnic actuator according to claim 1 or 2, **characterised in that** upon ignition the propellant charge housing (1) tears off at the predetermined breaking point (3), and the piston (5) is driven by the torn off region (1") of the propellant charge housing (1).

4. The pyrotechnic actuator according to any of claims 1 to 3, **characterised in that** the gap between the inner wall of the actuator housing (2) and the region (1") of the propellant charge housing (1) remote from the igniter is 0.1 - 2 mm.

5. The pyrotechnic actuator according to any of claims 1 to 4, **characterised in that** the distance between the end of the propellant charge housing (1) remote from the igniter and the predetermined breaking point (3), i.e. the height of the region (1") remote from the igniter, is 1 - 10 mm.

6. The pyrotechnic actuator according to any of claims 1 to 5, **characterised in that** the bursting pressure at which the propellant charge housing (1) ruptures along the predetermined breaking point (3) is 50 - 500 bar.

7. The pyrotechnic actuator according to any of claims 1 to 6, **characterised in that** the propellant charge housing (1) is made of aluminium or an aluminium alloy.

8. The pyrotechnic actuator according to any of claims 1 to 6, **characterised in that** the propellant charge housing (1) is made of steel or plastic.

9. The pyrotechnic actuator according to any of claims 1 to 8, **characterised in that** the predetermined breaking point (3) is implemented by reducing the inner diameter of the propellant charge housing (1) at a different point (3") than the outer diameter, such that the wall thickness between these two points (3', 3") is reduced.

10. The pyrotechnic actuator according to any of claims 1 to 8, **characterised in that** the predetermined breaking point (3) is implemented by embossing the propellant charge housing (1).

11. The pyrotechnic actuator according to any of claims 1 to 8, **characterised in that** the predetermined breaking point (3) is implemented by plunge swaging the propellant charge housing (1).

12. The pyrotechnic actuator according to any of claims 1 to 11, **characterised in that** the end of the piston (5) close to the igniter has a planar bottom.

## Revendications

1. Actionneur pyrotechnique pourvu d'un boîtier d'actionneur (2) dont la majeure partie de l'étendue longitudinale entoure une cavité cylindrique et d'un générateur de gaz (4) comportant un dispositif d'allumage, une charge propulsive et un boîtier de charge propulsive (1), le boîtier de charge propulsive (1) présentant une section à rupture prédéterminée (3) réalisée sous forme d'une réduction de son épaisseur, et le diamètre dans la zone (1") se trouvant sur le côté de la section à rupture prédéterminée (3) qui est éloigné du dispositif d'allumage (6) étant inférieur au diamètre dans la zone (1') se trouvant sur le côté de la section à rupture prédéterminée (3) qui est proche du dispositif d'allumage (6), **caractérisé en ce que** le boîtier d'actionneur (2) renferme un piston (5) pouvant être déplacé au sein de ladite cavité cylindrique, **que** la section à rupture prédéterminée (3) du boîtier de charge propulsive (1) est située dans ladite cavité cylindrique du boîtier d'actionneur (2), **que** le boîtier de charge propulsive (1) présente, sur le côté de la section à rupture prédéterminée (3) qui est éloigné du dispositif d'allumage (6), une distance par rapport à la paroi intérieure du boîtier d'actionneur (2), **et que** la zone (1") du boîtier de charge propulsive (1) se trouvant sur le côté de la section à rupture prédéterminée (3) qui est éloigné du dispositif d'allumage (6), est arrachée lors de l'allumage et la zone arrachée (1") du boîtier de charge propulsive (1) vient alors propulser le piston (5) et faire l'étanchéité vis-à-vis de la paroi intérieure du boîtier d'actionneur (2).

2. Actionneur pyrotechnique selon la revendication 1, **caractérisé en ce que** ladite réduction d'épaisseur est réalisée de manière radiale et périphérique autour du boîtier de charge propulsive (1).

3. Actionneur pyrotechnique selon les revendications 1 ou 2, **caractérisé en ce que** le boîtier de charge propulsive (1) est arrachée lors de l'allumage au niveau de la section à rupture prédéterminée (3) et le piston (5) est propulsé par la zone arrachée (1") du boîtier de charge propulsive (1) .

4. Actionneur pyrotechnique selon l'une des revendications 1 à 3, **caractérisé en ce que** l'interstice entre la paroi intérieure du boîtier d'actionneur (2) et la zone (1") du boîtier de charge propulsive (1) qui est éloignée du dispositif d'allumage, est compris entre 0,1 et 2 mm.

5. Actionneur pyrotechnique selon l'une des revendications 1 à 4, **caractérisé en ce que** la distance entre l'extrémité du boîtier de charge propulsive (1) qui est éloignée du dispositif d'allumage et la section à rupture prédéterminée (3), correspondant alors à la hauteur de la zone (1") éloignée du dispositif d'allumage, est compris entre 1 et 10 mm.

6. Actionneur pyrotechnique selon l'une des revendications 1 à 5, **caractérisé en ce que** la pression de rupture, à laquelle le boîtier de charge propulsive (1) va subir une rupture le long de la section à rupture prédéterminée (3), est comprise entre 50 et 500 bar.

7. Actionneur pyrotechnique selon l'une des revendications 1 à 6, **caractérisé en ce que** le boîtier de charge propulsive (1) est constitué d'aluminium ou d'un alliage d'aluminium.

8. Actionneur pyrotechnique selon l'une des revendications 1 à 6, **caractérisé en ce que** le boîtier de charge propulsive (1) est constitué d'acier ou d'une matière plastique.

9. Actionneur pyrotechnique selon l'une des revendications 1 à 8, **caractérisé en ce que** la section à rupture prédéterminée (3) est réalisée en réduisant le diamètre intérieur du boîtier de charge propulsive (1) à un autre endroit (3") que celui du diamètre extérieur, faisant en sorte que l'épaisseur de paroi soit réduite entre ces deux endroits (3', 3").

10. Actionneur pyrotechnique selon l'une des revendications 1 à 8, **caractérisé en ce que** la section à rupture prédéterminée (3) est réalisée en dotant le boîtier de charge propulsive (1) d'une marque obtenue par embossage.

11. Actionneur pyrotechnique selon l'une des revendications 1 à 8, **caractérisé en ce que** la section à rupture prédéterminée (3) est réalisée en dotant le boîtier de charge propulsive (1) d'un point obtenue par entaillage.

12. Actionneur pyrotechnique selon l'une des revendications 1 à 11, **caractérisé en ce que** l'extrémité du piston (5) qui est proche du dispositif d'allumage possède un fond plat.
